(19) Europäisches Patentamt
European Patent Office
Office européen des brevets

(11) Veröffentlichungsnummer: **0 588 203 A1**

# (12) EUROPÄISCHE PATENTANMELDUNG

(21) Anmeldenummer: **93114288.9**

(22) Anmeldetag: **06.09.93**

(51) Int. Cl.5: **A01N 37/44**, A01N 25/00, //(A01N37/44,37:40,37:36,37:10, 37:06,37:04,37:02)

(30) Priorität: **18.09.92 DE 4231281**

(43) Veröffentlichungstag der Anmeldung:
**23.03.94 Patentblatt 94/12**

(84) Benannte Vertragsstaaten:
**AT BE CH DE DK ES FR GB GR IT LI NL PT SE**

(71) Anmelder: **BAYER AG**

**D-51368 Leverkusen(DE)**

(72) Erfinder: **Lenz, Jürgen, Dr.**
**Haferkamp 1**
**D-51061 Köln(DE)**
Erfinder: **Nentwig, Günther, Dr.**
**Haferkamp 10**
**D-51061 Köln(DE)**
Erfinder: **Scherkenbeck, Jürgen, Dr.**
**Auf dem Bruch 49**
**D-51381 Leverkusen(DE)**
Erfinder: **Boeckh, Jürgen, Prof. Dr.**
**Rauschbergstrasse 8,**
**Schönhofen**
**D-93152 Nittendorf(DE)**
Erfinder: **Wendler, Gernot, Prof. Dr.**
**Heddinghofener Strasse 41**
**D-50374 Erftstadt(DE)**
Erfinder: **Dambach, Martin, Prof. Dr.**
**Altenhilgen 7**
**D-51399 Burscheid(DE)**
Erfinder: **Krüger, Bernd-Wieland, Dr.**
**Am Vorend 52**
**D-51467 Bergisch Gladbach(DE)**
Erfinder: **Moeschler, Heinrich F., Dr.**
**Odenthaler Markweg 34**
**D-51467 Bergisch Gladbach(DE)**
Erfinder: **Oskar, Rau, Dr.**
**Wilhelm-Ostwald-Strasse 10**
**D-51061 Köln(DE)**

## (54) Schabenbekämpfungsverfahren und Mittel zur Bekämpfung von Schaben.

(57) Die vorliegende Erfindung betrifft die neue Verwendung von Mischungen bestimmter chemischer Verbindungen als pheromon-ähnlich wirkende Substanzen bei der Bekämpfung von Schaben sowie Schabenbekämpfungsmittel, die diese Mischungen enthalten, wobei Einzelheiten der Beschreibung zu entnehmen sind.

EP 0 588 203 A1

Die vorliegende Erfindung betrifft die neue Verwendung von Mischungen bestimmter chemischer Verbindungen als pheromon-ähnlich wirkende Substanzen bei der Bekämpfung von Schaben sowie Schabenbekämpfungsmittel, die diese Mischungen enthalten.

Schabenbefall stellt in Haushalt und Gewerbe ein erhebliches hygienisches Problem dar, das die Bekämpfung der Schaben in vielen Fällen erforderlich macht. Aufgrund ihrer Lebensweise sind Schaben jedoch schwer bekämpfbar. Ein besonderes Problem liegt dabei darin, die Schaben zu mechanischen Bekämpfungsvorrichtungen (Fallen) oder zu insektizid wirksamen Mitteln zu locken. Zu diesem Zwecke wurden bereits weibliche Schabensexualpheromone eingesetzt, wobei deren Wirksamkeit nicht immer zu befriedigenden Ergebnissen führte. Von M.E.A. Fuchs, S. Franke und W. Franke (Zeitschrift für Angewandte Etomologie 99 (1985), 499-503) wurden bestimmte Carbonsäuren im Kot von Blattella germanica gefunden und ihre mögliche Rolle als Teil des Aggregationspheromons diskutiert, wobei sich keine praktisch verwertbaren Vorschläge ergaben.

Es wurde nun gefunden, daß die Mischungen aus wenigstens einer Verbindung der allgemeinen Formel

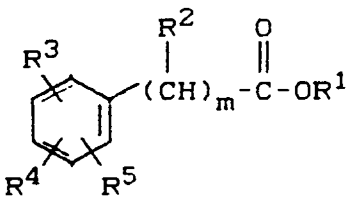

I

in welcher

- $R^1$ für Wasserstoff oder $C_1$-$C_5$-Alkyl steht;
- $R^2$ für Wasserstoff oder $C_1$-$C_5$-Alkyl steht;
- $R^3$ für Wasserstoff, Hydroxy oder $C_1$-$C_5$-Alkoxy steht;
- $R^4$ für Wasserstoff, Hydroxy oder $C_1$-$C_5$-Alkoxy steht;
- $R^5$ für Wasserstoff, Hydroxy, Amino oder $C_1$-$C_5$-Alkoxy steht; und
- m für eine ganze Zahl von 0 bis 10 steht;

oder deren Salzen,

und

a) wenigstens einer Verbindung der allgemeinen Formel II

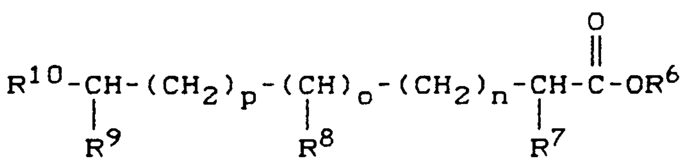

II

in welcher

- $R^6$ für Wasserstoff, $C_1$-$C_5$-Alkyl oder für gegebenenfalls substituiertes Phenyl steht;
- $R^7$ für Wasserstoff, Hydroxy oder $C_1$-$C_5$-Alkyl steht;
- $R^8$ für Wasserstoff oder $C_1$-$C_5$-Alkyl steht;
- $R^9$ für Wasserstoff oder $C_1$-$C_5$-Alkyl steht;
- $R^{10}$ für Wasserstoff, Carboxy, $C_1$-$C_5$-Alkoxycarbonyl oder gegebenenfalls substituiertes Phenoxycarbonyl steht;
- n für eine ganze Zahl von 0 bis 20 steht;
- o für 0 oder 1 steht; und
- p für eine ganze Zahl von 0 bis 20 steht;

oder deren Salzen,

und/oder

b) wenigstens einer Verbindung der allgemeinen Formel III

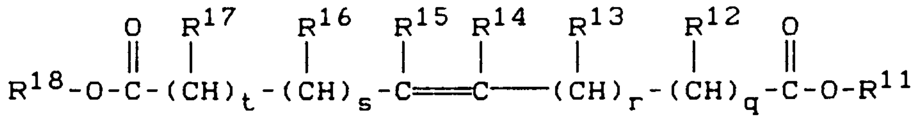

III

in welcher

- $R^{11}$ für Wasserstoff, $C_1$-$C_5$-Alkyl oder für gegebenenfalls substituiertes Phenyl steht;
- $R^{12}$ für Wasserstoff oder $C_1$-$C_5$-Alkyl steht;
- $R^{13}$ für Wasserstoff oder $C_1$-$C_5$-Alkyl steht;
- $R^{14}$ für Wasserstoff oder $C_1$-$C_5$-Alkyl steht;
- $R^{15}$ für Wasserstoff oder $C_1$-$C_5$-Alkyl steht;
- $R^{16}$ für Wasserstoff oder $C_1$-$C_5$-Alkyl steht;
- $R^{17}$ für Wasserstoff oder $C_1$-$C_5$-Alkyl steht;
- $R^{18}$ für Wasserstoff, $C_1$-$C_5$-Alkyl oder für gegebenenfalls substituiertes Phenyl steht;
- q für eine ganze Zahl von 0 bis 10 steht;
- r für eine ganze Zahl von 0 bis 10 steht;
- s für eine ganze Zahl von 0 bis 10 steht; und
- t für eine ganze Zahl von 0 bis 10 steht;

oder deren Salzen,
besonders vorteilhaft bei der Bekämpfung von Schaben eingesetzt werden können.

Der Ausdruck "Verbindungen der allgemeinen Formel II" schließt die cis- und die trans-Isomeren sowie Mischungen dieser Isomeren ein.

Im folgenden Text schließt der Ausdruck "Verbindungen der allgemeinen Formeln I, II und III" auch die Salze solcher Verbindungen der Formeln I, II und III ein, welche eine oder mehrere saure Gruppen tragen und somit mit Basen Salze bilden können.

Die erfindungsgemäßen Mischungen weisen gegenüber Schaden pheromon-ähnliche Wirkungen auf und sind dazu geeignet, die Schaben an bestimmte Orte zu locken und/oder die Aufenthaltsdauer an diesen Orten zu verlängern, wo sie mit mechanischen und/oder chemischen Mitteln bekämpft werden können. Die Verbindungen der Formeln I, II und III sind stabil und durch Synthese leicht zugänglich und in den erfindungsgemäßen Mischungen hoch wirksam.

In den obigen allgemeinen Formeln sowie in den unten aufgeführten Restedefinitionen haben die Reste die folgenden allgemeinen sowie bevorzugten Bedeutungen:

Alkyl als solches oder als Bestandteil von Alkoxy oder Alkoxycarbonyl bedeutet geradkettiges oder verzweigtes Alkyl mit 1 bis 5, vorzugsweise 1 bis 4 und besonders bevorzugt 1 bis 3 Kohlenstoffatomen, wobei Methyl, Ethyl, n- und i-Propyl, n-, i-, s- und t-Butyl speziell genannt seien, wobei Methyl und Ethyl, insbesondere Methyl besonders hervorgehoben werden sollen.

Im gegebenenfalls substituierten Phenyl, Phenoxy oder Phenoxycarbonyl trägt der Phenylring vorzugsweise ein bis drei, besonders bevorzugt ein oder zwei Substituenten, die gleich oder verschieden sein können. Als Substituenten können alle in der Wirkstoffchemie üblichen Substituenten stehen. Als bevorzugte Substituenten seien aufgeführt: $C_1$-$C_4$-Alkyl, $C_1$-$C_4$-Alkoxy, $C_1$-$C_4$-Alkylthio, $C_1$-$C_4$-Halogenalkyl, $C_1$-$C_4$-Halogenalkoxy, Nitro, Hydroxy und Halogen (vorzugsweise Fluor, Chlor und/oder Brom).

Die Verbindungen der allgemeinen Formeln I, II und III, welche eine oder mehrere saure Gruppen (insbesondere Carboxylgruppen) enthalten, können auch als Salze mit Basen vorliegen. Die Salze können mit anorganischen Basen, wie Alkali- und Erdalkalimetallbasen (vorzugsweise mit Natrium-, Kalium- oder Calcium-Hydroxiden, Carbonaten oder Hydrocarbonaten) oder vorzugsweise mit organischen Basen (insbesondere gegebenenfalls durch HO-Gruppen substituierten $C_1$-$C_4$-Trialkylaminen) gebildet werden. Vorzugsweise werden die Verbindungen der allgemeinen Formeln I, II und III in Form der freien Säuren eingesetzt.

- $R^1$ steht in der allgemeinen Formel I vorzugsweise für Wasserstoff oder $C_1$-$C_3$-Alkyl, besonders bevorzugt für Wasserstoff, Methyl oder Ethyl und ganz besonders bevorzugt für Wasserstoff.
- $R^2$ steht in der allgemeinen Formel I vorzugsweise für Wasserstoff oder $C_1$-$C_3$-Alkyl, besonders bevorzugt für Wasserstoff, Methyl oder Ethyl und ganz besonders bevorzugt für Wasserstoff.
- $R^3$ steht in der allgemeinen Formel I vorzugsweise für Wasserstoff, Hydroxy oder $C_1$-$C_3$-Alkoxy, besonders bevorzugt für Wasserstoff, Hydroxy, Methoxy oder Ethoxy und ganz besonders bevorzugt für Wasserstoff oder Hydroxy.
- $R^4$ steht in der allgemeinen Formel I vorzugsweise für Wasserstoff, Hydroxy oder $C_1$-$C_3$-Alkoxy, besonders bevorzugt für Wasserstoff, Hydroxy, Methoxy oder Ethoxy und ganz besonders

bevorzugt für Wasserstoff oder Hydroxy.

$R^5$ steht in der allgemeinen Formel I vorzugsweise für Wasserstoff, Hydroxy, Amino oder $C_1$-$C_3$-Alkoxy, besonders bevorzugt für Wasserstoff, Hydroxy, Amino, Methoxy oder Ethoxy und ganz besonders bevorzugt für Wasserstoff oder Amino.

m steht in der allgemeinen Formel I für eine ganze Zahl, vorzugsweise von 0 bis 5, besonders bevorzugt von 0 bis 3 und ganz besonders bevorzugt für 0, 1 oder 2.

In den erfindungsgemäß verwendbaren Verbindungen der allgemeinen Formel I können die als vorzugsweise, besonders bevorzugt oder ganz besonders bevorzugt angegebenen Reste auch beliebig miteinander kombiniert vorliegen.

Erfindungsgemäß bevorzugt werden die Verbindungen der allgemeinen Formel I verwendet, in welchen eine Kombination der vorstehend als vorzugsweise aufgeführten Bedeutungen vorliegt.

Erfindungsgemäß besonders bevorzugt werden die Verbindungen der allgemeinen Formel I verwendet, in welchen eine Kombination der vorstehend als besonders bevorzugt aufgeführten Bedeutungen vorliegt.

Erfindungsgemäß ganz besonders bevorzugt werden die Verbindungen der allgemeinen Formel I verwendet, in welchen eine Kombination der vorstehend als ganz besonders bevorzugt aufgeführten Bedeutungen vorliegt.

Als erfindungsgemäß verwendbare Verbindungen der Formel I seien beispielhaft und besonders hervorgehoben speziell die Verbindungen der Tabelle 1 aufgeführt, wobei die Verbindungen der Formeln I/3 bis I/5 ganz besonders hervorgehoben werden sollen.

Tabelle 1

| Verbindung Nr. | $R^1$ | $R^2$ | $R^3$ | $R^4$ | $R^5$ | m |
|---|---|---|---|---|---|---|
| I/1 | H (Benzoesäure) | H | H | H | H | 0 |
| I/2 | H (Phenylessigsäure) | H | H | H | H | 1 |
| I/3 | H (Anthranilsäure) | H | H | H | 2-$NH_2$ | 0 |
| I/4 | H (3-(m-Hydroxyphenyl)-propionsäure) | H | 3-OH | H | H | 2 |
| I/5 | H (3-(p-Hydroxyphenyl)-propionsäure) | H | 4-OH | H | H | 2 |

$R^6$ steht in der allgemeinen Formel II vorzugsweise für Wasserstoff oder $C_1$-$C_3$-Alkyl, besonders bevorzugt für Wasserstoff, Methyl oder Ethyl und ganz besonders bevorzugt für Wasserstoff.

$R^7$ steht in der allgemeinen Formel II vorzugsweise für Wasserstoff, Hydroxy oder $C_1$-$C_3$-Alkyl, besonders bevorzugt für Wasserstoff, Hydroxy oder Methyl und ganz besonders bevorzugt für Wasserstoff.

$R^8$ steht in der allgemeinen Formel II vorzugsweise für Wasserstoff oder $C_1$-$C_3$-Alkyl, besonders bevorzugt für Wasserstoff, Methyl oder Ethyl und ganz besonders bevorzugt für Wasserstoff oder Methyl.

$R^9$ steht in der allgemeinen Formel II vorzugsweise für Wasserstoff oder $C_1$-$C_3$-Alkyl, besonders bevorzugt für Wasserstoff, Methyl oder Ethyl und ganz besonders bevorzugt für Wasserstoff oder Methyl.

$R^{10}$ steht in der allgemeinen Formel II vorzugsweise für Wasserstoff, die Carboxy-Gruppe (-COOH) oder für $C_1$-$C_3$-Alkoxycarbonyl, besonders bevorzugt für Wasserstoff oder die Carboxy-Gruppe und ganz besonders bevorzugt für die Carboxy-Gruppe.

n steht in der allgemeinen Formel II für eine ganze Zahl von vorzugsweise 0 bis 18, besonders bevorzugt von 0 bis 16 und ganz besonders bevorzugt von 1 bis 16.

o steht in der allgemeinen Formel II vorzugsweise für 0 oder 1 und besonders bevorzugt sowie ganz besonders bevorzugt für 1.

p steht in der allgemeinen Formel II für eine ganze Zahl von vorzugsweise 0 bis 18, besonders bevorzugt von 0 bis 5 und ganz besonders bevorzugt für 0, 1 oder 2.

In den erfindungsgemäß verwendbaren Verbindungen der allgemeinen Formel II können die als vorzugsweise, besonders bevorzugt oder ganz besonders bevorzugt anggebenen Reste auch beliebig miteinander kombiniert vorliegen.

Erfindungsgemäß bevorzugt werden die Verbindungen der allgemeinen Formel II verwendet, in welchen eine Kombination der vorstehend als vorzugsweise aufgeführten Bedeutungen vorliegt.

Erfindungsgemäß besonders bevorzugt werden die Verbindungen der allgemeinen Formel II verwendet, in welchen eine Kombination der vorstehend als besonders bevorzugt aufgeführten Bedeutungen vorliegt.

Erfindungsgemäß ganz besonders bevorzugt werden die Verbindungen der allgemeinen Formel II verwendet, in welchen eine Kombination der vorstehend als ganz besonders bevorzugt aufgeführten Bedeutungen vorliegt.

Ganz besonders bevorzugt werden solche Verbindungen der Formel II, in welchen $R^7$, $R^8$ und $R^9$ für Wasserstoff stehen, oder in welchen einer der Reste $R^7$, $R^8$ und $R^9$ für Methyl steht,

Als erfindungsgemäß verwendbare Verbindungen der Formel II seien beispielhaft und besonders hervorgehoben speziell die Verbindungen der Tabelle 2 aufgeführt.

Tabelle 2

| Verbindung Nr. | $R^{10}$ | $R^9$ | $R^8$ | $R^7$ | $R^6$ | p | o | n |
|---|---|---|---|---|---|---|---|---|
| II/1 | H | H | - | -OH | $C_2H_5$ | 0 | 0 | 0 |
| | (2-Hydroxypropionsäure) | | | | | | | |
| II/2 | H | H | H | H | H | 0 | 1 | 2 |
| | (Caprinsäure) | | | | | | | |
| II/3 | H | H | H | H | H | 1 | 1 | 10 |
| | (Palmitinsäure) | | | | | | | |
| II/4 | H | H | H | H | H | 1 | 1 | 12 |
| | (Stearinsäure) | | | | | | | |
| II/5 | HOOC- | H | H | H | H | 0 | 1 | 0 |
| | (Glutarsäure) | | | | | | | |
| II/6 | HOOC- | H | H | H | H | 0 | 1 | 1 |
| | (Adipinsäure) | | | | | | | |
| II/7 | HOOC- | H | H | H | H | 1 | 0 | 2 |
| | (Pimelinsäure) | | | | | | | |
| II/8 | HOOC- | H | H | H | H | 1 | 1 | 2 |
| | (Suberinsäure) | | | | | | | |

Tabelle 2 - Fortsetzung

| Verbindung Nr. | $R^{10}$ | $R^9$ | $R^8$ | $R^7$ | $R^6$ | p | o | n |
|---|---|---|---|---|---|---|---|---|
| II/9 | HOOC- (Azelainsäure) | H | H | H | H | 2 | 1 | 2 |
| II/10 | HOOC- (Methylpimelinsäure) | einer der Reste $R^7$-$R^9$ bedeutet Methyl, die anderen stehen für Wasserstoff | | | H | 0 | 1 | 2 |
| II/11 | HOOC- (Methyladipinsäure) | einer der Reste $R^7$-$R^9$ bedeutet Methyl, die anderen stehen für Wasserstoff | | | H | 0 | 1 | 1 |

$R^{11}$ steht in der allgemeinen Formel III vorzugsweise für Wasserstoff oder $C_1$-$C_3$-Alkyl, besonders bevorzugt für Wasserstoff, Methyl oder Ethyl und ganz besonders für Wasserstoff.

$R^{12}$ steht in der allgemeinen Formel III vorzugsweise für Wasserstoff oder $C_1$-$C_3$-Alkyl, besonders bevorzugt für Wasserstoff, Methyl oder Ethyl und ganz besonders für Wasserstoff oder Methyl.

$R^{13}$ steht in der allgemeinen Formel III vorzugsweise für Wasserstoff oder $C_1$-$C_3$-Alkyl, besonders bevorzugt für Wasserstoff, Methyl oder Ethyl und ganz besonders für Wasserstoff oder Methyl.

$R^{14}$ steht in der allgemeinen Formel III vorzugsweise für Wasserstoff oder $C_1$-$C_3$-Alkyl, besonders bevorzugt für Wasserstoff, Methyl oder Ethyl und ganz besonders für Wasserstoff oder Methyl.

$R^{15}$ steht in der allgemeinen Formel III vorzugsweise für Wasserstoff oder $C_1$-$C_3$-Alkyl, besonders bevorzugt für Wasserstoff, Methyl oder Ethyl und ganz besonders für Wasserstoff oder Methyl.

$R^{16}$ steht in der allgemeinen Formel III vorzugsweise für Wasserstoff oder $C_1$-$C_3$-Alkyl, besonders bevorzugt für Wasserstoff, Methyl oder Ethyl und ganz besonders für Wasserstoff oder Methyl.

$R^{17}$ steht in der allgemeinen Formel III vorzugsweise für Wasserstoff oder $C_1$-$C_3$-Alkyl, besonders bevorzugt für Wasserstoff, Methyl oder Ethyl und ganz besonders für Wasserstoff oder Methyl.

$R^{18}$ steht in der allgemeinen Formel III vorzugsweise für Wasserstoff oder $C_1$-$C_3$-Alkyl, besonders bevorzugt für Wasserstoff, Methyl oder Ethyl und ganz besonders für Wasserstoff oder Methyl.

q, r, s und t stehen in der allgemeinen Formel III unabhängig von einander für eine ganze Zahl von vorzugsweise 0 bis 8, besonders bevorzugt 0 bis 5 und ganz besonders bevorzugt von 0 bis 3.

In den erfindungsgemäß verwendbaren Verbindungen der allgemeinen Formel III können die als vorzugsweise, besonders bevorzugt oder ganz besonders bevorzugt angegebenen Reste auch beliebig

miteinander kombiniert vorliegen.

Erfindungsgemäß bevorzugt werden die Verbindungen der allgemeinen Formel III verwendet, in welchen eine Kombination der vorstehend als vorzugsweise aufgeführten Bedeutungen vorliegt.

Erfindungsgemäß besonders bevorzugt werden die Verbindungen der allgemeinen Formel III verwendet, in welchen eine Kombination der vorstehend als besonders bevorzugt aufgeführten Bedeutungen vorliegt.

Erfindungsgemäß ganz besonders bevorzugt werden die Verbindungen der allgemeinen Formel III verwendet, in welchen eine Kombination der vorstehend als ganz besonders bevorzugt aufgeführten Bedeutungen vorliegt.

Bei den Verbindungen der allgemeinen Formel III stehen die Reste $R^{18}$OCO- und $R^{11}$OCO- vorzugsweise in trans-Stellung.

Als erfindungsgemäß verwendbare Verbindungen der Formel III seien beispielhaft und besonders hervorgehoben speziell die Verbindungen der Tabelle 3 aufgeführt.

Tabelle 3

| Verbindung Nr. | $R^{18}$ | $R^{17}$ | $R^{16}$ | $R^{15}$ | $R^{14}$ | $R^{13}$ | $R^{12}$ | $R^{11}$ | t | s | r | q |
|---|---|---|---|---|---|---|---|---|---|---|---|---|
| III/1 | H | - | - | H | H | - | - | H | 0 | 0 | 0 | 0 |
| | | (Fumarsäure) | | | | | | | | | | |

Die Verbindungen der allgemeinen Formeln I, II und III sind bekannt oder können nach allgemein üblichen Verfahren und Methoden erhalten werden.

Erfindungsgemäß können Mischungen aus einer oder mehreren der Verbindungen der allgemeinen Formel I (vorzugsweise Verbindungen Nr. I/1 bis I/5 der Tabelle 1) mit einer oder mehreren Verbindungen der allgemeinen Formel II (vorzugsweise Verbindungen Nr. II/1 bis II/10 der Tabelle 2) und/oder mit einer oder mehreren Verbindungen der allgemeinen Formel III (vorzugsweise Verbindung Nr. III/1 der Tabelle 3) verwendet werden. Hierbei soll ganz besonders eine Mischung hervorgehoben werden, welche alle Verbindungen Nr. I/1 bis I/5 und alle Verbindungen Nr. II/1 bis II/10 und die Verbindung Nr. III/1 enthält oder aus einem Gemisch dieser Verbindungen besteht.

Die Zusammensetzungen der erfindungsgemäßen Mischungen aus den Verbindungen der Formeln I, II und/oder III können über weite Bereiche variiert werden, ohne daß deren Wirksamkeit wesentlich beeinträchtigt wird. Die Mischungen enthalten die Verbindungen der Formel I vorzugsweise zu 5 bis 95, besonders bevorzugt zu 20 bis 80 und ganz besonders bevorzugt zu 30 bis 60 Gewichtsteilen. Die Verbindungen der Formeln II und/oder III sind in den Mischungen in vorzugsweise 5 bis 95, besonders bevorzugt 20 bis 80 und ganz besonders bevorzugt 40 bis 70 Gewichtsteilen enthalten.

In einer besonders hervorgehobenen Ausführungsform liegen alle Verbindungen der Formeln I, II und/oder III in etwa gleichen Gewichtsteilen vor.

In einer ganz besonders hervorgehobenen Ausführungsform der Erfindung enthält die Mischung der Verbindungen der Formeln I, II und/oder III wenigstens die folgenden Einzelverbindungen (alle %-Angaben sind Gewichtsprozente):

Milchsäure (vorzugsweise 0,5 bis 5 %), Capronsäure (vorzugsweise 0,5-3 %), Benzoesäure (vorzugsweise 2 bis 20 %), Phenylessigsäure (vorzugsweise 5 bis 40 %), Fumarsäure (vorzugsweise 0,1 bis 1 %), Glutarsäure (vorzugsweise 0,5 bis 8 %), Anthranilsäure (vorzugsweise 0,3 bis 15 %), Adipinsäure (vorzugsweise 0,3 bis 5 %), Methyladipinsäure (vorzugsweise 0,3 bis 5 %), Pimelinsäure (vorzugsweise 1 bis 20 %), Suberinsäure (vorzugsweise 0,5 bis 10 %), m-Hydroxyphenylpropionsäure (vorzugsweise 5 bis 50 %), p-Hydroxyphenylpropionsäure (vorzugsweise 0,5 bis 10 %), Azelainsäure (vorzugsweise 0,5 bis 10 %), Palmitinsäure (vorzugsweise 0,3 bis 8 %) und Stearinsäure (vorzugsweise 0,3 bis 8 %).

Die Mischungen der Verbindungen der allgemeinen Formeln I, II und/oder III können erfindungsgemaß bei der Bekämpfung von Schaben, also Insekten der Ordnung Blattariae, insbesondere der Familie

Blattellidae, vorzugsweise der Art Blattella germanica oder der Familie Blattidae, vorzugsweise der Arten Blatta orientalis und Periplaneta americana, aber auch gegen andere Schabenarten, ganz besonders bevorzugt jedoch gegen Blattella germanica, eingesetzt werden.

Die erfindungsgemäßen Mischungen beeinflussen dabei das Verhalten der Schaben derart, daß diese sich verstärkt an solchen Orten aufhalten oder solche Orte aufsuchen, die mit den Mischungen behandelt wurden bzw. solche Mischungen enthalten. Die erfindungsgemäßen Mischungen weisen somit pheromonähnliche Wirkungen auf. Diese Wirkung tritt bei allen beweglichen Entwicklungsstadien (Larven, Adulten) der Schaben auf. Die erfindungsgemäßen Mischungen können somit ganz allgemein bei der Schabenbekämpfung, unabhängig von der Art der angewendeten Bekämpfungsmethode eingesetzt werden. Sie können bei mechanischen Bekämpfungsverfahren beispielsweise und vorzugsweise in Schabenfallen oder Klebevorrichtungen oder bei biologischen oder chemischen Bekämpfungsverfahren oder bei einer Kombination solcher Bekampfungsverfahren eingesetzt werden. Bei mechanischen Vorrichtungen können die erfindungsgemäßen Mischungen ganz oder weitflächig oder an geeigneten diskreten Stellen, z.B. durch Bestreichen, Aufsprühen, Imprägnieren, Aufdrucken, gegebenenfalls zusammen mit weiteren wirksamen Mitteln, wie anlockenden Farben, Ködermaterialien oder anderen Lockmitteln, synthetischen und natürlichen Insektiziden usw. angebracht werden. Bei biologischen oder chemischen Bekämpfungsverfahren können die erfindungsgemäßen Mischungen mit den insektenpathogen wirkenden Organismen (z.B. Viren oder Mikroorganismen) oder den natürlichen oder synthetischen Insektiziden vermischt oder in ausreichender Nähe zu diesen Organismen oder Stoffen vorliegen. Bei einer Kombination mehrerer Bekämpfungsmethoden gilt entsprechendes.

Dem Fachmann ist es anhand einfacher Überlegungen oder einfacher Untersuchungen leicht möglich, die für die jeweiligen Verwendungszwecke günstigen Mischungen sowie Anwendungsarten und Mengen zu ermitteln.

Vorzugsweise werden die erfindungsgemäßen Mischungen aus den Verbindungen der allgemeinen Formeln I, II und/oder III in einen Insektizide enthaltenden Köder oder in Klebefallen eingearbeitet oder in der Nähe des Ködermaterials (z.B. darüber) angebracht. Die Mischungen können auch in einer Form vorliegen, in der sie über einen längeren Zeitraum freigegeben werden (Slowrelease-Formulierungen). Hierzu können sie z.B. in Polymermaterial, Paraffinen, Wachsen usw. eingearbeitet werden oder mikroverkapselt vorliegen. Als Fallen können die üblichen Vorrichtungen dienen und als Ködermaterialien können übliche fraßattraktive Mittel dienen. Vorzugsweise werden die Mischungen aus den Verbindungen der allgemeinen Formeln I, II und/oder III in Mengen von 0,0001 bis 100 mg (ganz besonders bevorzugt 0,01 bis 20 mg) je Köder oder Falle, z.B. Klebefalle eingesetzt.

Die Verbindungen können auch in Form der üblichen Spritzmittel gegebenenfalls in Mischung mit geeigneten Insektiziden ausgebracht werden. Hierbei können die üblichen Formulierungen verwendet werden, die mit den üblicherweise gebräuchlichen Applikationsgeräten ausgebracht werden können. Ebenso ist es möglich, die erfindungsgemäßen Mischungen der Verbindungen der allgemeinen Formeln I, II und/oder III gegebenenfalls in Mischung mit geeigneten Insektiziden, zu streufähigen Stäuben oder Granulaten zu formulieren. Die Aufwandmengen an Mischungen der Verbindungen der allgemeinen Formeln I, II und/oder III liegen vorzugsweise bei 1 bis 500 mg je $m^2$ und besonders bevorzugt bei 2 bis 200 mg je $m^2$ Durch die Anwendung der erfindungsgemäßen Mischungen kann die Wirksamkeit von mechanischen Vorrichtungen (wie Fallen, Klebebänder) sowie insbesondere auch von insektiziden Mitteln erheblich verbessert werden. Teil der vorliegenden Erfindung sind somit auch mechanische Schabenbekämpfungsvorrichtungen und Mittel, die eine Mischung der Verbindungen der allgemeinen Formeln I, II und/oder III enthalten. Bevorzugte mechanische Vorrichtungen und Mittel sind die üblichen Schabenfallen, die gegebenenfalls Köder, weitere Lock- oder Fraßstoffe und/oder insektizide Stoffe enthalten sowie Mittel mit einer klebrigen Oberfläche an denen die Schaben haften bleiben, die gegebenenfalls neben üblichen Träger- und Hilfsstoffen, Fraß- und Lockstoffe und/oder insektizid wirksame Stoffe eine erfindungsgemäße Mischung aus Verbindungen der allgemeinen Formeln I, II und/oder III aufweisen. Hierbei können die erfindungsgemäßen Mischungen in der klebrigen Oberfläche enthalten sein oder in deren unmittelbaren Nähe angebracht vorliegen. In den mechanischen Vorrichtungen können auch Kombinationen von Fallen und Mitteln mit klebriger Oberfläche eingesetzt werden.

Ebenfalls Teil der vorliegenden Erfindung sind Schabenbekämpfungsmittel, welche gegebenenfalls neben üblichen Träger- und Hilfsstoffen und/oder sonstigen Zusatzstoffen (wie Ködermittel, Farbstoffe, Lockstoffe) eine erfindungsgemäße Mischung aus den Verbindungen der allgemeinen Formeln I, II und/oder III und wenigstens einen insektizid wirksamen Stoff enthalten, wobei die erfindungsgemäße Mischung mit den übrigen Bestandteilen vermischt sein können oder in einer separaten Anordnung vorliegen können. Diese Mittel können zusätzlich oder statt der insektizid wirksamen Stoffe auch entomopathogene Viren oder Mikroorganismen, die gegen Schaben wirksam sind, enthalten.

Als insektizide Stoffe können alle Stoffe verwendet werden, welche gegen Schaben wirksam sind, da es zu keiner unerwünschten Wechselwirkung zwischen den insektizid wirkenden Stoffen und den erfindungsgemäßen Mischungen kommt.

Insektizid wirkende Stoffe können beispielsweise den insektizid wirkenden Phosphorsäureestern, Carbamaten, natürlichen Pyrethrinen und synthetischen Pyrethroiden, Nitroimino-, Nitromethylen-, Cyanoimino- oder Cyanomethylen-Verbindungen, Pyrrolidin-2,4-dion-Derivaten, Pyrazolin-Derivaten, Azadirachrinen, Annoninen und/oder Ryanodinen angehören.

Als erfindungsgemäß besonders bevorzugte insektizide Stoffe seien aufgeführt:

1) Carbamidsäureestern der Formel IV

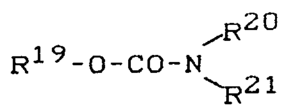

IV

in welcher

$R^{19}$ für einen gegebenenfalls substituierten carbocyclischen oder heterocyclischen aromatischen Rest oder für einen gegebenenfalls substituierten Oximrest steht (wobei die weiter unten erläuterten Reste $R^{19}$ bevorzugt werden),

$R^{20}$ für $C_1$-$C_4$-Alkyl steht und

$R^{21}$ für Wasserstoff, $C_1$-$C_4$-Alkyl oder für einen Rest U steht, wobei

U für den Rest $-CO-R^{22}$ steht, worin

$R^{22}$ für Halogen, $C_1$-$C_4$-Alkyl, $C_1$-$C_4$-Alkoxy, $C_3$-$C_5$-Alkenoxy, $C_3$-$C_5$-Alkinoxy, $C_1$-$C_4$-Alkylthio, $C_1$-$C_4$-Alkyl-amino, Di-$C_1$-$C_4$-Alkylamino, $C_1$-$C_4$-Alkyl-hydroxylamino, für gegebenenfalls durch Halogen, Nitro, Cyano, Trifluormethyl, $C_1$-$C_4$-Alkyl, $C_1$-$C_4$-Alkoxy, $C_1$-$C_4$-Alkylendioxy, $C_1$-$C_4$-Alkylthio, $C_1$-$C_4$-Alkoxy-carbonyl substituiertes Phenoxy, Phenylthio oder Phenylamino, für 2,3-Dihydro-2,2-dimethyl-7-benzo-furanyl oder für den Rest

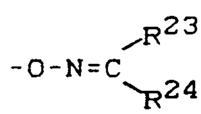

steht, worin

$R^{23}$ für Wasserstoff, $C_1$-$C_4$-Alkyl oder Di-$C_1$-$C_4$-alkyl-amino-carbonyl steht und

$R^{24}$ für $C_1$-$C_4$-Alkyl, $C_1$-$C_4$-Alkylthio, Cyano-$C_1$-$C_4$-alkylthio, $C_1$-$C_4$-Alkylthio-$C_1$-$C_4$-alkyl steht,

oder die beiden Reste $R^{23}$ und $R^{24}$ zusammen für gegebenenfalls durch Sauerstoff, Schwefel, SO oder $SO_2$ unterbrochenes $C_2$-$C_8$-Alkandiyl stehen, oder

in welcher

U für den Rest $-S_v(O)_w-R^{25}$ steht, worin

v für 1 oder 2 und

w für 0, 1 oder 2 stehen, wobei im Falle daß v für 2 steht, w 0 bedeutet und

$R^{25}$ für gegebenenfalls durch Halogen substituiertes $C_1$-$C_4$-Alkyl, $C_3$-$C_5$-Alkenyl, $C_3$-$C_5$-Alkinyl oder $C_3$-$C_6$-Cycloalkyl, für gegebenenfalls durch Halogen, Cyano, Nitro, Trifluormethyl, Trifluormethoxy, Trifluormethylthio, $C_1$-$C_4$-Alkyl oder $C_1$-$C_4$-Alkoxy substituiertes Phenyl, Benzyl oder Phenylethyl oder für den Rest

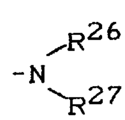

steht, worin

$R^{26}$ für $C_1$-$C_4$-Alkyl, $C_3$-$C_5$-Alkenyl, $C_3$-$C_5$-Alkinyl, $C_3$-$C_6$-Cycloalkyl oder Benzyl steht und

$R^{27}$ für $C_1$-$C_4$-Alkyl, $C_3$-$C_5$-Alkenyl, $C_3$-$C_5$-Alkinyl, $C_3$-$C_6$-Cycloalkyl, Benzyl, Phenylethyl, Halogencarbonyl, Formyl, $C_1$-$C_4$-Alkyl-carbonyl, $C_1$-$C_4$-Alkoxy-carbonyl, $C_1$-$C_4$-Alkoxyphenoxy-carbonyl, $C_3$-$C_5$-Alkinoxy-carbonyl, $C_3$-$C_5$-Alkenoxycarbonyl, $C_1$-$C_4$-Alkylthiocarbonyl, $C_1$-$C_4$-Alkyl-aminocarbonyl, $C_1$-$C_4$-Alkyl-hydroxylamino-carbonyl, $C_1$-$C_{10}$-Alkyl-phenoxycarbonyl, Di-$C_1$-$C_4$-alkylaminocarbonyl, Phenylthiocarbonyl, Phenoxycarbonyl, 2,3-Dihydro-2,2-dimethyl-7-benzofuranyloxycarbonyl, für gegebenenfalls durch Halogen, Cyano, Nitro, Trifluormethyl, $C_1$-$C_{10}$-Alkyl oder $C_1$-$C_4$-Alkoxy substituietes Phenylsulfenyl, Phenylsulfinyl, Phenylsulfonyl oder Phenyl steht, oder für den Rest

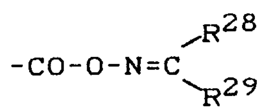

steht, worin

$R^{28}$ die oben für $R^{23}$ angegebene Bedeutung und

$R^{29}$ die oben für $R^{24}$ angegebene Bedeutung hat,

wobei ferner im Rest

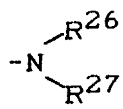

die Reste $R^{26}$ und $R^{27}$ zusammen für eine gegebenenfalls durch Sauerstoff oder Schwefel unterbrochene Kohlenwasserstoffkette mit 3 bis 8 Kohlenstoffatomen stehen und worin weiter $R^{25}$ auch für den gleichen Rest stehen kann, an den der Rest $-S_v(O)_w-R^{25}$ gebunden ist.

Als Wirkstoffkomponenten ganz besonders bevorzugt sind Carbamidsäureester der Formel IV, in welcher

$R^{19}$ für gegebenenfalls durch $C_1$-$C_4$-Alkyl, $C_2$-$C_4$-Alkenyl, $C_1$-$C_4$-Alkoxy, $C_1$-$C_4$-Alkoxy-methyl, $C_1$-$C_4$-Alkylthio, $C_1$-$C_4$-Alkylthio-methyl, $C_1$-$C_4$-Alkyl-amino, Di-($C_1$-$C_4$-alkyl)-amino, Di-($C_3$-$C_4$-alkenyl)-amino, Halogen, Dioxolanyl, Methylendioxy und/oder durch den Rest $-N=CH-N(CH_3)_2$ substituierte Reste aus der Reihe Phenyl, Naphthyl, 2,3-Dihydro-7-benzofuranyl, Pyrazolyl oder Pyrimidinyl steht, oder in welcher

$R^{19}$ für einen Alkylidenaminorest der Formel

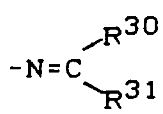

steht, in welcher

$R^{30}$ und $R^{31}$ die oben für $R^{23}$ bzw. $R^{24}$ angegebene Bedeutung haben,

$R^{20}$ für $C_{1-4}$-Alkyl steht und

$R^{21}$ für Wasserstoff oder $C_1$-$C_4$-Alkyl (vorzugsweise für Wasserstoff) steht.

Als Beispiele für die Carbamidsäureester der Formel IV seien die folgenden N-Methylcarbamidsäureester genannt: 2-Methyl-phenyl-, 2-Ethyl-phenyl-, 2-iso-Propyl-phenyl-, 2-sec.-Butyl-phenyl-, 2-Methoxy-phenyl-, 2-Ethoxy-phenyl, 2-iso-Propoxy-phenyl-, 4-Methyl-phenyl-, 4-Ethyl-phenyl-, 4-n-Propyl-phenyl-, 4-Methoxy-phenyl-, 4-Ethoxy-phenyl-, 4-n-Propoxy-phenyl-, 3,4,5-Trimethyl-phenyl-, 3,5-Dimethyl-4-methylthiophenyl-, 3-Methyl-4-dimethylamino-phenyl-, 2-Ethylthiomethyl-phenyl-, 1-Naphthyl-, 2,3-Dihydro-2,2-dimethyl-7-benzofuranyl-, 2,3-(Dimethylmethylendioxy)-phenyl-, 2-(4,5-Dimethyl-1,3-dioxolan-1-yl)-phenyl-, 1-Methylthio-ethyliden-amino-, 2-Methylthio-2-methylpropylidenamino-,1-(2-Cyano-ethylthio)-ethylidenamino- und

1-Methylthiomethyl-2,2-dimethylpropylidenamino-N-methyl-carbamidsäureester, wobei das 2-iso-Propoxyphenyl-N-methylcarbamat bevorzugt wird.

2) Carbonsäureester der Formel V

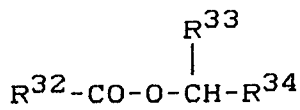

V

in welcher

$R^{32}$ für einen offenkettigen oder cyclischen Alkylrest steht, der gegebenenfalls substituiert ist durch Halogen, Alkyl, Cycloalkyl, durch gegebenenfalls durch Halogen, Alkyl und/oder Alkoxy substituiertes Alkenyl, durch Phenyl oder Styryl, welche gegebenenfalls durch Halogen, gegebenenfalls Halogen-substituierte Reste aus der Reihe Alkyl, Alkoxy, Alkylendioxy und/oder Alkylthio substituiert sind, durch spirocyclisch verknüpftes, gegebenenfalls Halogen-substituiertes Cycloalk(en)yl, welches gegebenenfalls benzannelliert ist, in welcher weiter

$R^{33}$ für Wasserstoff, Alkyl, Halogenalkyl, Alkenyl, Alkinyl oder Cyano steht, und

$R^{34}$ für einen gegebenenfalls substituierten Alkyl- oder Arylrest oder für einen Heterocyclus steht, oder zusammen mit $R^{33}$ und dem Kohlenstoffatom, an das beide Reste gebunden sind, einen Cyclopentenonring bildet.

Ganz besonders als Wirkstoffkomponenten bevorzugt sind Carbonsäureester der Formel V, in welcher

$R^{32}$ (a) für den Rest

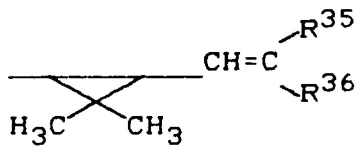

steht, worin

$R^{35}$ für Wasserstoff, Methyl, Fluor, Chlor oder Brom und

$R^{36}$ für Methyl, Fluor, Chlor, Brom, $C_1$-$C_2$-Fluoralkyl oder $C_1$-$C_2$-Chlorfluoralkyl oder für gegebenenfalls durch Halogen und/oder gegebenenfalls Halogen-substituierte Reste der Reihe $C_1$-$C_4$-Alkyl, $C_1$-$C_4$-Alkoxy, $C_1$-$C_4$-Alkylthio und/oder $C_1$-$C_2$-Alkylendioxy substituiertes Phenyl steht, oder worin beide Reste $R^{35}$ und $R^{36}$ für $C_2$-$C_5$-Alkandiyl (Alkylen) stehen;

oder in welcher

$R^{32}$ (b) für den Rest

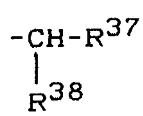

steht, worin

$R^{37}$ für gegebenenfalls durch Halogen und/oder durch gegebenenfalls Halogen-substituierte Reste der Reihe $C_1$-$C_4$-Alkyl, $C_1$-$C_4$-Alkoxy, $C_1$-$C_4$-Alkylthio oder $C_1$-$C_2$-Alkylendioxy substituiertes Phenyl steht und

$R^{38}$ für Isopropyl oder Cyclopropyl steht;

oder in welcher

$R^{32}$ (c) für Methyl oder einen der Reste

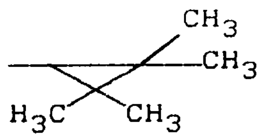 , 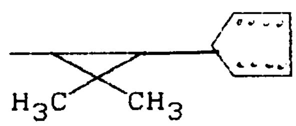 ,

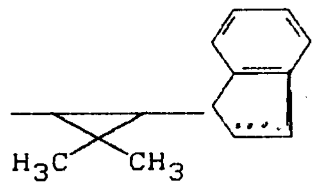

wobei die gepunkteten Linien mögliche Doppelbindungen andeuten sollen, steht,

und in welcher

$R^{32}$ für Wasserstoff, $C_1$-$C_4$-Alkyl, $C_1$-$C_4$-Halogenalkyl, Cyano oder Ethinyl steht und

$R^{34}$ für die Reste der Reihe Phenyl, Furyl oder Tetrahydrophthalimido steht, wobei diese Reste substituiert sein können durch Halogen und/oder Reste dar Reihe $C_1$-$C_4$-Alkyl, $C_2$-$C_4$-Alkenyl, $C_1$-$C_4$-Alkoxy, $C_2$-$C_4$-Alkenoxy, $C_1$-$C_4$-Alkylthio, $C_1$-$C_2$-Alkylendioxy, Phenoxy und/oder Benzyl, welche ihrerseits durch Halogen substituiert sein können und wobei $R^{24}$ vorzugsweise für Tetrafluorphenyl, 3,4-Dichlor-phenyl, Tetrahydrophthalimido oder für Phenoxyphenyl steht, welches in einem oder beiden Phenylringen durch Halogen (vorzugsweise Fluor) substituiert sein kann.

Weiter sind die natürlich vorkommenden Pyrethroide (wie Pyrethrum) als Carbonsäureester der Formel V besonders bevorzugt.

Als Beispiele für erfindungsgemäß besonders bevorzugte Carbonsäureester der Formel V seinen genannt

2,2-Dimethyl-3-(2-methyl-propen-1-yl)-cyclopropan-carbonsäure-(3,4,5,6-tetrahydro-phthalimido-methyl)-ester, 2,2-Dimethyl-3-(2,2-dichlorvinyl)-cyclopropan-carbonsäure-(3-phenoxy-benzyl)-ester, 2,2-Dimethyl-3-(2,2-dichlorvinyl)-cyclopropancarbonsäure-(α-cyano-3-phenoxy-benzyl)-ester, 2,2-Dimethyl-3-(2,2-dichlorvinyl)-cyclopropan-carbonsäure-(α-cyano-4-fluor-3-phenoxy-benzyl)-ester, 2,2-Dimethyl-3-(2,2-dichlorvinyl)-cyclopropancarbonsäure-(2,3,5,6-tetrafluor-benzyl)-ester, 2,2-Dimethyl-3-(2,2-dibromvinyl)-cyclopropancarbonsäure-(α-cyano-3-phenoxy-benzyl)-ester und 3-Methyl-2-(4-chlorphenyl)-butansäure-(α-cyano-3-phenoxy-benzyl)-ester.

3) Phosphorsäure- und Phosphonsäureestern der allgemeinen Formel VI

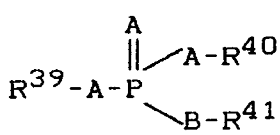 VI

in welcher

| | |
|---|---|
| A | gleich oder verschieden ist und für O oder S steht und |
| B | für O, S, -NH- oder für eine direkte Bindung zwischen dem zentralen P-Atom und $R^{41}$ steht und |
| $R^{39}$ und $R^{40}$ | gleich oder verschieden sind und für gegebenenfalls substituiertes Alkyl oder Aryl stehen, |
| $R^{41}$ | für Wasserstoff, gegebenenfalls substituiertes Alkyl, Aryl, Heteroaryl, Aralkyl, Alkenyl, Dioxanyl oder einen Oximrest oder für den gleichen Rest steht, an den es gebunden ist. |

Besonders bevorzugt sind Phosphorsäure- und Phosphonsäureester der Formel VI, in welcher

$R^{39}$ und $R^{40}$ gleich oder verschieden sind und für $C_1$-$C_4$-Alkyl oder Phenyl stehen,

$R^{41}$ für Wasserstoff, Alkyl mit 1 bis 4 Kohlenstoffatomen steht, das gegebenenfalls durch Halogen, Hydroxyl, Cyano, gegebenenfalls Halogen-substituiertes Phenyl, Carbamoyl, Alkylsulfonyl, Alkylsulfinyl, Alkylcarbonyl, Alkoxy, Alkylthio, Alkoxycarbonyl, Alkylaminocarbonyl, letztere mit jeweils bis zu 6 Kohlenstoffatomen, substituiert ist, für Alkenyl mit bis zu 4 Kohlenstoffatomen, das gegebenenfalls durch Halogen-substituiertes Phenyl oder $C_1$-$C_4$-Alkoxycarbonyl substituiert ist, oder für den Rest der allgemeinen Formel

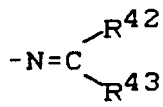

wobei $R^{42}$ und $R^{43}$ die oben für $R^{23}$ bzw. $R^{24}$ angegebene Bedeutung besitzen, oder für Cyano oder Phenyl stehen, und in welcher

$R^{41}$ ferner für Dioxanyl, das durch denselben Rest substituiert ist, an den $R^{40}$ gebunden ist, oder $R^{41}$ für den gleichen Rest an den es gebunden ist steht, oder $R^{41}$ für Phenyl, das gegebenenfalls durch Methyl, Nitro, Cyano, Halogen und/oder Methylthio substituiert ist steht, wobei

$R^{41}$ außerdem besonders bevorzugt für gegebenenfalls durch $C_1$-$C_4$-Alkoxy, $C_1$-$C_4$-Alkylthiomethyl, $C_1$-$C_4$-Alkyl und/oder durch Halogen substituierte heteroaromatische Reste, wie Pyridinyl, Chinolinyl, Chinoxalinyl, Pyrimidinyl oder Benzo-1,2,4-triazinyl steht.

Im einzelnen seien genannt:

O,O-Dimethyl- bzw. O,O-Diethyl-O-(2,2-dichlor- bzw. 2,2-dibromvinyl)-phosphorsäureester,
O,O-Diethyl-O-(4-nitro-phenyl)-thionophosphorsäureester,
O,O-Dimethyl-O-(3-methyl-4-methylthio-phenyl)-thionophosphorsäureester,
O,O-Dimethyl-O-(3-methyl-4-nitro-phenyl)-thionophosphorsäureester,
O-Ethyl-S-n-propyl-O-(2,4-dichlorphenyl)-thionophosphorsäureester,
O-Ethyl-S-n-propyl-O-(4-methylthio-phenyl)-thionophosphorsäureester,
O,O-Dimethyl-S-(4-oxo-1,2,3-benzotriazin(3)yl-methyl)-thionothiolphosphorsäureester,
O-methyl-O-(2-iso-propyl-6-methoxy-pyrimidin(4)yl)-thionomethanphosphonsäureester,
O,O-Diethyl-O-(2-iso-propyl-6-methyl-pyrimidin(4)yl)-thionophosphorsäureester,
O,O-Diethyl-O-(3-chlor-4-methyl-cumarin(7)yl)-thionophosphorsäureester,
O,O-Dimethyl-2,2,2-trichlor-1-hydroxy-ethan-phosphonsäureester,
O,O-Dimethyl-S-(methylaminocarbonyl-methyl)-thionophosphonsäureester,
O-Methyl-O-(6-methoxy-2-tert.-butyl-pyrimidin-4-yl)-thionoethan-phosphonsäure-diester.

4) Nitromethylen-, Nitroimino-, Cyanoimino- oder Cyanomethylen-Derivate der Formel VII

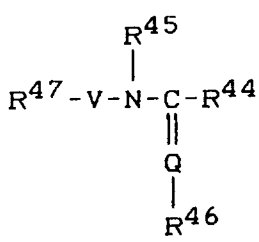

VII

in welcher

$R^{44}$ für $C_1$-$C_4$-Alkyl (vorzugsweise für Methyl oder Ethyl) oder für die Gruppe

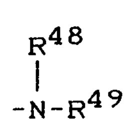

steht, in welcher

$R^{48}$ $C_1$-$C_4$-Alkyl (vorzugsweise Methyl oder Ethyl) bedeutet oder

$R^{48}$ gemeinsam mit $R^{45}$ eine gegebenenfalls verzweigte $C_2$-$C_5$-Alkandiyl-Kette (vorzugsweise -$(CH_2)_2$- oder -$(CH_2)_3$-) darstellt,

und

$R^{49}$ Wasserstoff oder $C_1$-$C_4$-Alkyl (vorzugsweise Wasserstoff) bedeutet;

$R^{45}$ für $C_1$-$C_4$-Alkyl (vorzugsweise Methyl oder Ethyl) steht oder gemeinsam mit $R^{48}$ eine gegebenenfalls verzweigte $C_2$-$C_5$-Alkandiyl-Kette (vorzugsweise -$(CH_2)_2$- oder -$(CH_2)_3$-) darstellt,

$R^{46}$ für $NO_2$ oder CN steht;

$R^{47}$ für einen gegebenenfalls substituierten (vorzugsweise durch Halogen und/oder $C_1$-$C_4$-Alkyl substituierten) heteroaromatischen Rest (vorzugsweise Pyridylrest) steht (wobei $R^{47}$ besonders bevorzugt für die 2-Chlorpyridyl-5-Gruppe steht);

Q für =C- oder =N- steht; und

V für eine direkte Bindung oder für einen $C_1$-$C_3$-Alkandiyl-Rest (vorzugsweise für -$CH_2$-) steht.

Im folgenden werden beispielhaft einige besonders bevorzugte Verbindungen der Formel VII speziell aufgeführt:

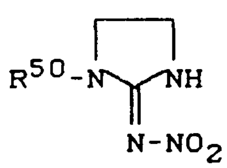

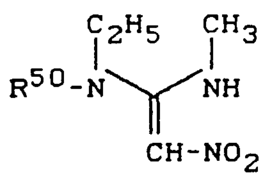

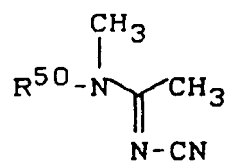

wobei $R^{50}$ den

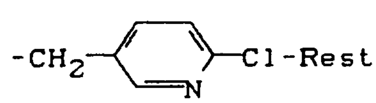

bedeutet.

Die erfindungsgemaßen Mischungen der Verbindungen der Formeln I, II und/ober III und/oder die insektiziden Stoffe sowie die Mischungen der erfindungsgemaßen Mischungen der Verbindungen der Formeln I, II und/oder III mit den insektiziden Stoffen konnen in Abhangigkeit von ihren jeweiligen physikalischen und/oder chemischen Eigenschaften in übliche Formulierungen übergeführt werden, wie Losungen, Emulsionen, Suspensionen, Pulver, Schaume, Pasten, Granulate, Aerosole, Wirkstoff-imprägnierte Natur- und synthetische Stoffe sowie Feinstverkapselungen in polymeren Stoffen.

Diese Formulierungen werden in bekannter Weise hergestellt, z.B. durch Vermischen der Wirkstoffe mit Hilfs- und/oder Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Losungsmittel, wie Dimethylformamid und Dimethylsulfoxid, sowie Wasser; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage; z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder schaumerzeugende Mittel kommen in Frage: z.B. nichtionogene und anionische Emulgatoren, wie Polyoxyethylen-Fettsaure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und

Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen können im Falle von Köderformulierungen (vorzugsweise Streuköderformulierungen oder Festköderformulierungen) zusätzlich weitere Zusatzstoffe enthalten, die die Schaben anlocken und/oder zur Aufnahme der insektiziden Stoffe veranlassen. Als Lockstoffe und Fraßstoffe konnen alle üblicherweise verwendeten Präparate verwendet werden, wie natürliche oder synthetische Geruchsstoffe, Farbstoffe und/oder Stoffe, die von Schaben gerne aufgenommen werden, wie stärke-, protein- und/oder zuckerhaltige Produkte auf Getreide- oder Zuckerbasis.

Die Formulierungen enthalten vorzugsweise 0,001 bis 95, insbesondere 0,01 bis 70, Gewichtsprozente an Mischungen der Verbindungen der Formeln I, II und/oder III.

Die Formulierungen der insektiziden Stoffe enthalten (gegebenenfalls neben den Mischungen der Verbindungen der Formeln I, II und/oder III) vorzugsweise zwischen 0,1 und 95, insbesondere 0,5 und 90 Gewichtsprozente insektizide Stoffe.

Die Anwendung der Schabenbekämpfungsmittel erfolgt in einer an die Anwendungsform angepaßten üblichen Weise,

Die biologische Wirksamkeit der erfindungsgemaßen Mischungen der Verbindungen der Formeln I, II und/oder III soll anhand der folgenden Beispiele erläutert werden.

Beispiel A

Verbesserung einer Köderwirkung

In einem Raum (2,25 x 4,70 m) befinden sich in 2 gegenüberliegenden Ecken je ein Versteck sowie je eine Tranke, in den anderen Ecken je ein Stück Zwieback. Einen Tag nach Freilassen von 20 männlichen, 20 weiblichen und 20 juvenilen Schaben (Blattella germanica) wird in 40 cm Wandabstand zum Zwieback je eine Köderdose mit einer insektizidhaltigen Fraßtablette (insektizider Wirkstoff: 0,5 Gew.-% Ethylchlorpyrifos) aufgestellt.

Auf der Innenseite des Köderdosendeckels befindet sich ein Plättchen, das 1 Stunde zuvor mit einer erfindungsgemäßen Mischung (gelöst in Methanol) oder nur mit Methanol behandelt wird (unbehandelter Köder).

3 Räume werden jeweils mit behandelten Köderdosen und 3 mit unbehandelten Köderdosen besetzt.

Am folgenden Tag wird die Mortalität der männlichen und weiblichen Tiere bestimmt.

Testergebnis von Versuchen bei denen als erfindungsgemäße Mischung eine etwa gleichteilige (Gewichtsteile) Mischung aus den Verbindungen Nr. I/1 bis I/5, II/1 bis II/10 und III/1 eingesetzt wurde ("Mischung A"):

| Behandlungsart | % Mortalität nach 1 Tag Gesamtpopulation |
|---|---|
| Kontrolle (nur Insektizid) | 29 |
| Insektizid + Mischung A (25 mg) | 57 |

Beispiel B

Verbesserung einer Spritzmittelwirkung

Keramikkacheln werden mit einer wäßrigen Spritzbrühe besprüht, welche (a) den insektiziden Wirkstoff Cyfluthrin oder (b) Cyfluthrin und die Mischung A (vgl. Beispiel A) enthält, so daß die Aufwandmenge an Cyfluthrin 20 mg Wirkstoff je $m^2$ und die Aufwandmenge Mischung A 4 mg je $m^2$ beträgt.

Je eine dieser Kacheln wird in die Ecke eines Behälters (49 x 59 cm, Höhe 29,5 cm) gelegt, in dem sich eine Tränke, Futter, ein Versteck sowie 2 Stunden zuvor eingesetzte Männchen und Weibchen von

Blattella germanica (je 5 Stück) befinden. Jeder Versuch besteht aus 3 Wiederholungen.
Testergebnis (Mittel aus 3 Versuchen):

| Behandlungsart | Mortalität in % und 1 Tag |
|---|---|
| Kontrolle (nur Insektizid)<br>Insektizid + Mischung A | 43<br>80 |

**Patentansprüche**

1. Verwendung von Mischungen aus wenigstens einer Verbindung der allgemeinen Formel I

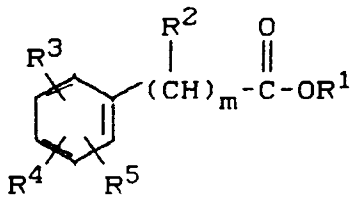

I

in welcher

$R^1$ für Wasserstoff oder $C_1$-$C_5$-Alkyl steht;
$R^2$ für Wasserstoff oder $C_1$-$C_5$-Alkyl steht;
$R^3$ für Wasserstoff, Hydroxy oder $C_1$-$C_5$-Alkoxy steht;
$R^4$ für Wasserstoff, Hydroxy oder $C_1$-$C_5$-Alkoxy steht;
$R^5$ für Wasserstoff, Hydroxy, Amino oder $C_1$-$C_5$-Alkoxy steht; und
m für eine ganze Zahl von 0 bis 10 steht;
oder deren Salzen,
und

a) wenigstens einer Verbindung der allgemeinen Formel II

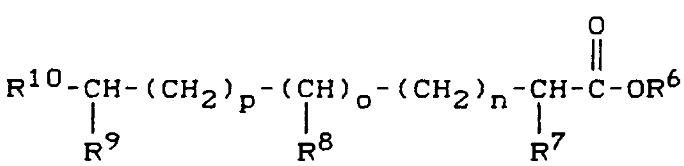

II

in welcher

$R^6$ für Wasserstoff, $C_1$-$C_5$-Alkyl oder für gegebenenfalls substituiertes Phenyl steht;
$R^7$ für Wasserstoff, Hydroxy oder $C_1$-$C_5$-Alkyl steht;
$R^8$ für Wasserstoff oder $C_1$-$C_5$-Alkyl steht;
$R^9$ für Wasserstoff oder $C_1$-$C_5$-Alkyl steht;
$R^{10}$ für Wasserstoff, Carboxy, $C_1$-$C_5$-Alkoxycarbonyl oder gegebenenfalls substituiertes Phenoxycarbonyl steht;
n für eine ganze Zahl von 0 bis 20 steht;
o für 0 oder 1 steht; und
p für eine ganze Zahl von 0 bis 20 steht;
oder deren Salzen,
und/oder

b) wenigstens einer Verbindung der allgemeinen Formel III

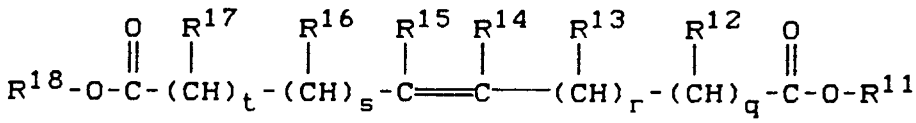

III

in welcher

- $R^{11}$ für Wasserstoff, $C_1$-$C_5$-Alkyl oder für gegebenenfalls substituiertes Phenyl steht;
- $R^{12}$ für Wasserstoff oder $C_1$-$C_5$-Alkyl steht;
- $R^{13}$ für Wasserstoff oder $C_1$-$C_5$-Alkyl steht;
- $R^{14}$ für Wasserstoff oder $C_1$-$C_5$-Alkyl steht;
- $R^{15}$ für Wasserstoff oder $C_1$-$C_5$-Alkyl steht;
- $R^{16}$ für Wasserstoff oder $C_1$-$C_5$-Alkyl steht;
- $R^{17}$ für Wasserstoff oder $C_1$-$C_5$-Alkyl steht;
- $R^{18}$ für Wasserstoff, $C_1$-$C_5$-Alkyl oder für gegebenenfalls substituiertes Phenyl steht;
- q für eine ganze Zahl von 0 bis 10 steht;
- r für eine ganze Zahl von 0 bis 10 steht;
- s für eine ganze Zahl von 0 bis 10 steht; und
- t für eine ganze Zahl von 0 bis 10 steht;

oder deren Salzen,
bei der Bekämpfung von Schaben.

**2.** Verwendung gemäß Anspruch 1, wobei in der allgemeinen Formel I

- $R^1$ für Wasserstoff oder $C_1$-$C_3$-Alkyl steht;
- $R^2$ für Wasserstoff oder $C_1$-$C_3$-Alkyl steht;
- $R^3$ für Wasserstoff, Hydroxy oder $C_1$-$C_3$-Alkoxy steht;
- $R^4$ für Wasserstoff, Hydroxy oder $C_1$-$C_3$-Alkoxy steht;
- $R^5$ für Wasserstoff, Hydroxy, Amino oder $C_1$-$C_3$-Alkoxy steht und
- m für eine ganze Zahl von 0 bis 5 steht.

**3.** Verwendung gemäß Anspruch 1, wobei in der allgemeinen Formel II

- $R^6$ für Wasserstoff oder $C_1$-$C_3$-Alkyl steht;
- $R^7$ für Wasserstoff, Hydroxy oder $C_1$-$C_3$-Alkyl steht;
- $R^8$ für Wasserstoff oder $C_1$-$C_3$-Alkyl steht;
- $R^9$ für Wasserstoff oder $C_1$-$C_3$-Alkyl steht;
- $R^{10}$ für Wasserstoff, die Carboxy-Gruppe oder für $C_1$-$C_3$-Alkoxycarbonyl steht;
- n für eine ganze Zahl von 0 bis 18 steht;
- o für 0 oder 1 steht; und
- p für eine ganze Zahl von 0 bis 18 steht.

**4.** Verwendung gemäß Anspruch 1, wobei in der allgemeinen Formel III

- $R^{11}$ bis $R^{18}$ unabhängig voneinander für Wasserstoff oder $C_1$-$C_3$-Alkyl stehen; und
- q, r, s und t unabhängig voneinander für eine ganze Zahl von 0 bis 8 stehen.

**5.** Verwendung gemäß Anspruch 1, wobei in den allgemeinen Formeln I bis III die Reste die in den Ansprüchen 2 bis 4 angegebenen Bedeutungen haben.

**6.** Verwendung gemäß Anspruch 1 bei der Schabenbekämpfung mit mechanischen Schabenbekämpfungsvorrichtungen und Mitteln, mit biologischen oder chemischen Mitteln und mit Kombinationen solcher Vorrichtungen und Mittel.

**7.** Mechanische Schabenbekämpfungsvorrichtungen und Mittel, welche eine Mischung aus Verbindungen der allgemeinen Formeln I, II und/oder III gemäß Anspruch 1 enthalten.

**8.** Schabenbekämpfungsmittel, welche

(a) eine Mischung von Verbindungen der allgemeinen Formeln I, II und/oder III gemäß Anspruch 1 und

(b) wenigstens einen entomopathogenen Virus oder Mikroorganismus und/oder wenigstens einen insektizid wirkenden Stoff und gegebenenfalls

(c) ein oder mehrere Hilfs- und/oder Streckmittel und/oder sonstige Zusatzstoffe enthalten,

wobei die obigen Bestandteile in einer Mischung oder in einer separaten Anordnung vorliegen können.

**9.** Mechanische Schabenbekämpfungsvorrichtungen und Mittel nach Anspruch 7, welche ein Schabenbekämpfungsmittel gemäß Anspruch 8 enthalten.

**10.** Schabenbekämpfungsmittel, welche eine klebrige Oberfläche aufweisen, an denen die Schaben haften bleiben und welche eine Mischung von Verbindungen der allgemeinen Formeln I, II und/oder III gemäß Anspruch 1 in der klebrigen Oberflächenschicht oder in unmittelbarer Nähe der klebrigen Oberfläche enthalten.

Europäisches Patentamt

# EUROPÄISCHER RECHERCHENBERICHT

Nummer der Anmeldung
EP 93 11 4288

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
| --- | --- | --- | --- |
| D,Y | ZEITSCHRIFT FüR ANGEWANDTE ENTOMOLOGIE<br>Bd. 99 , 1985 , HAMBURG/BERLIN, DE<br>Seiten 499 - 503<br>M.E.A.FUCHS ET AL. 'Carbonsäuren im Kot von Blattella germanica (L.) und ihre mögliche Rolle als Teil des Aggregationspheromons'<br>* das ganze Dokument *<br>--- | 1-10 | A01N37/44<br>A01N25/00<br>//(A01N37/44, 37:40,37:36, 37:10,37:06, 37:04,37:02) |
| Y | DATABASE WPI<br>Week 7120,<br>Derwent Publications Ltd., London, GB;<br>AN 71-34926S [20]<br>& JP-A-46 018 518 (ISHII)<br>* Zusammenfassung *<br>--- | 1-10 | |
| Y | JOURNAL OF ECONOMIC ENTOMOLOGY<br>Bd. 70, Nr. 1 , Februar 1977 , COLLEGE PARK, MARYLAND US<br>Seiten 34 - 38<br>M.K.RUST ET AL. 'Using Pheromone Extract to Reduce Repellency of Blatticides'<br>--- | 1-10 | RECHERCHIERTE SACHGEBIETE (Int.Cl.5) |
| Y | DE-A-40 03 072 (INDUSTRIELLE TIERPRODUKTION)<br>* Spalte 1, Zeile 24 - Zeile 36 *<br>* Spalte 2, Zeile 31 - Zeile 36 *<br>* Anspruch 2 *<br>--- | 1-10 | A01N |
| X | EP-A-0 212 226 (AMERICAN CYANAMID)<br>* Spalte 1, Zeile 7 - Spalte 2, Zeile 4 *<br>* Spalte 1, Zeile 46 - Spalte 2, Zeile 33 *<br>* Spalte 3, Zeile 22 - Spalte 4, Zeile 22 *<br>---<br>-/-- | 8 | |

Der vorliegende Recherchenbericht wurde für alle Patentansprüche erstellt

| Recherchenort | Abschlußdatum der Recherche | Prüfer |
| --- | --- | --- |
| DEN HAAG | 27. Dezember 1993 | Lamers, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)

Europäisches Patentamt

# EUROPÄISCHER RECHERCHENBERICHT

Nummer der Anmeldung
EP 93 11 4288

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | DATABASE WPI<br>Week 7539,<br>Derwent Publications Ltd., London, GB;<br>AN 75-64688W [39]<br>& JP-A-50 042 052 (YAMABUN YUKA) 16. April 1975<br>* Zusammenfassung *<br>--- | 1-10 | |
| A | DATABASE WPI<br>Week 8619,<br>Derwent Publications Ltd., London, GB;<br>AN 86-123240 [19]<br>& JP-A-61 063 603 (RIKEN KORYO KOGYO) 1. April 1986<br>* Zusammenfassung *<br>--- | 1-10 | |
| A | DATABASE WPI<br>Week 6800,<br>Derwent Publications Ltd., London, GB;<br>AN 67-04893H [00]<br>& JP-B-44 000 320 (SANKYO)<br>* Zusammenfassung *<br>--- | 1-10 | RECHERCHIERTE SACHGEBIETE (Int.Cl.5) |
| A | JOURNAL OF ECONOMIC ENTOMOLOGY<br>Bd. 76, Nr. 4 , August 1983 , COLLEGE PARK, MARYLAND US<br>Seiten 752 - 756<br>E.O.WILEYTO ET AL. 'Attraction of the German Cockroach, Blattella germanica (Orthoptera: Blatellidae), to Some Volatile Food Components'<br>---<br>-/-- | 1-10 | |

Der vorliegende Recherchenbericht wurde für alle Patentansprüche erstellt

| Recherchenort | Abschlußdatum der Recherche | Prüfer |
|---|---|---|
| DEN HAAG | 27. Dezember 1993 | Lamers, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

Europäisches Patentamt

# EUROPÄISCHER RECHERCHENBERICHT

Nummer der Anmeldung
EP 93 11 4288

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | DATABASE WPI<br>Week 7611,<br>Derwent Publications Ltd., London, GB;<br>AN 76-19328X [11]<br>& JP-A-51 009 728 (IKARI YAKUHIN) 26. Januar 1976<br>* Zusammenfassung *<br>--- | 1-10 | |
| A | WO-A-91 17656 (TEMPLE UNIVERSITY)<br>* Seite 1, Absatz 2 *<br>* Seite 6, Zeile 7 - Zeile 8 *<br>* Seite 10, Absatz 2 - Seite 11, Absatz 2 *<br>----- | 8 | |
| | | | RECHERCHIERTE SACHGEBIETE (Int.Cl.5) |

Der vorliegende Recherchenbericht wurde für alle Patentansprüche erstellt

| Recherchenort | Abschlußdatum der Recherche | Prüfer |
|---|---|---|
| DEN HAAG | 27. Dezember 1993 | Lamers, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)